Europäisches Patentamt

European Patent Office

Office européen des brevets

(19)

(11) Veröffentlichungsnummer: **0 100 076**
**B1**

(12) **EUROPÄISCHE PATENTSCHRIFT**

(45) Veröffentlichungstag der Patentschrift: **15.06.88**

(21) Anmeldenummer: **83107222.8**

(22) Anmeldetag: **22.07.83**

(51) Int. Cl.⁴: **H 04 Q 11/04,** H 04 J 3/06

(54) Schaltungsanordnung zur Takterzeugung in Fernmeldeanlagen, insbesondere Zeitmultiplex-Digital-Vermittlungsanlagen.

(30) Priorität: **26.07.82 DE 3227848**

(43) Veröffentlichungstag der Anmeldung:
**08.02.84 Patentblatt 84/06**

(45) Bekanntmachung des Hinweises auf die
Patenterteilung:
**15.06.88 Patentblatt 88/24**

(84) Benannte Vertragsstaaten:
**AT CH FR GB IT LI NL SE**

(56) Entgegenhaltungen:
EP-A-0 100 077
DE-A-2 907 608
FR-A-2 473 235

TELCOM REPORT, Band 4, 1981, Beiheft
"Digitalvermittlungssystem EWSD", Seiten 43-
48, Passau, DE; H. GRÜNER u.a.:
"Synchronisation der
Vermittlungseinrichtungen in Digitalnetzen"

(73) Patentinhaber: **Siemens Aktiengesellschaft**
**Berlin und München**
**Wittelsbacherplatz 2**
**D-8000 München 2 (DE)**

(72) Erfinder: **Flasche, Ulrich, Ing.grad**
**Wolfratshauser Strasse 64**
**D-8023 Pullach (DE)**

## Beschreibung

Die Erfindung betrifft eine Schaltungsanordnung für Fernmeldeanlagen, insbesondere PCM-Fernsprechvermittlungsanlagen, mit einer doppelt vorgesehenen Amtstaktversorgungsanordnung, von welcher der jeweils eine der beiden Amtstakterzeuger einen unabhängig von dem jeweils anderen Amtstakterzeuger erzeugten Amtstakt leifert und der jeweils andere (geführte) Amtstakterzeuger einen mit dem von dem jeweils einen (führenden) Amtstakterzeuger gelieferten Amtstakt zumindest angenähert phasengleich synchronisierten Amtstakt liefert und von welcher jeder der beiden Amtstakterzeuger durch einen ihm zugeführten Mastertakt servosynchronisiert einen Zwischentakt mit einer gegenüber der maximal zugelassenen Phasendifferenz zwischen den von den beiden Amtstakterzeugern gelieferten Amtstakt höchstens gleich großen Taktperiode erzeugt, und in welcher in jedem der beiden Amtstakterzeuger der Zwischentakt je einem Frequenzuntersetzer zur Gewinnung des Amtstaktes zugeführt wird, und in welcher der jeweils geführte Amtstakterzeuger seinen Amtstakt mit dem Amtstakt des jeweils führenden Amtstakterzeuger vergleicht und bei Feststellung einer einen Grenzwert in der Größenordnung einer Zwischentaktperiode überschreitenden Phasendifferenz eine Halbperiode des geführten Amtstaktes mit Hilfe einer Regelungseinrichtung um die Länge einer Zwischentaktperiode bei nacheilendem geführten Amtstakt verkürzt und bei voreilendem geführten Amtstakt verlängert, und in welcher der vom jeweils führenden Amtstakterzeuger gelieferte Amtstakt überwacht und bei dessen Ausfall die Regelungseinrichtung des bis dahin geführten Amtstakterzeugers ausgeschaltet wird, wodurch dieser zum führenden Amtstakterzeuger wird, dessen Amtstakt nun dem bisher führenden und zum geführten gewordenen Amtstakterzeuger zugeleitet wird.

Eine Schaltungsanordnung dieser Art ist bereits durch die DE—A—29 07 608 bekannt. Bei einer solchen Amtstakterzeugungsanordnung setzt also eine Nachregelung der Amtstaktphasenlage des geführten Amtstaktes ein, wenn dieser gegenüber dem führenden Amtstakt voreilt oder nacheilt. Eilt er z.B. vor, so wird eine Halbperiode des geführten Amtstaktes um die Länge einer Zwischentaktperiode verlängert. Ferner ist bei der bekannten Anordnung vorgesehen, daß bei einem Ausfall des führenden Amtstaktes der bis dahin geführte Amtstakterzeuger nun zum führenden Amtstakterzeuger wird, indem bei ihm die Regelungseinrichtung, mit deren Hilfe er sich bei seiner Takterzeugung bis zu diesem Zeitpunkt an dem Amtstakt des bis dahin führenden Amtstakterzeugers orientiert hut und von diesem Zeitpunkt also nicht mehr orientieren kann, abgeschaltet wird, und indem der von dem bisher geführten und von diesem Zeitpunkt an führenden Amtstakterzeuger erzeugte Amtstakt dem anderen Amtstakterzeuger zugeleitet wird.

In einer Schaltungsanordnung der bekannten Art besteht das Problem, daß ein Ausfall des Amtstaktes des zunächst führenden Amtstaktgebers vom geführten Amtstaktgeber als ein Voreilen oder Nacheilen des von ihm erzeugten Amtstaktes gewertet wird, und zwar je nachdem, ob dieser Ausfall in einem Taktleitungssignal Dauer-Null oder Dauer-Eins besteht, woraufhin bei dem geführten Amtstaktgeber der Regelungsvorgang der Verlängerung der Halbperiode seines Amtstaktes stattfindet, bis aber dann von ihm erkannt wird, daß der Amtstakt des bis dahin führenden Amtstaktgebers überhaupt ausgefallen ist. Denn bei Ausfall des führenden Amtstaktes ist eine Voreilung bzw. Nacheilung bereits innerhalb einer Zwischentaktperiode nach dem Zeitpunkt signalisiert, zu dem die jeweils ausgefallene Taktflanke des führenden Amtstaktes zu erwarten war, während der tatsächliche Ausfall des führenden Amtstaktes erst nach Verlauf wenigstens einer Amtstaktperiode, die aber eine Mehrzahl von Zwischentaktperioden umfaßt, mit Sicherheit feststellbar ist. Der bis dahin geführte und nun zum führenden gewordene Amtstaktgeber erfährt also unmittelbar vor diesem Rollentausch eine Korrektur hinsichtlich der Phasenlage des von ihm erzeugten Amtstaktes; dieser Korrektur, die also nicht auf einer tatsächlich eingetretenen Voreilung bzw. Nacheilung des von ihm erzeugten Amtstaktes beruht, verursacht einen unerwünschten Phasensprung, der nicht ausgeregelt wird, da inzwischen durch Korrekturvorgang der Rollentausch erfolgt ist, wobei der bis zu diesem Zeitpunkt geführte und nun zum führenden gewordene Amtstaktgeber mit einem Amtstakt in verschobener Phasenlage seine Aufgabe als den Amtstakt liefernder Amtstaktgeber antritt. Hierin liegt die Ursache für einen bleibenden Fehler im Taktsystem, dessen Beseitigung Aufgabe der Erfindung ist.

Für die Erfindung besteht also die Aufgabe, bei Ausfall des führenden Amtstaktes zu verhindern, daß dies vom geführten Amtstaktgeber als ein Voreilen oder Nacheilen des von ihm erzeugten Amtstaktes gegenüber dem führenden Amtstakt gewertet wird.

Die Erfindung löst die gestellte Aufgabe dadurch, daß die Regelungseinrichtung des zunächst geführten Amtstakterzeugers die Verlängerung bzw. die Verkürzung der Halbperiode des von ihm gelieferten Amtstaktes bei Feststellung einer Nacheilung bzw. Voreilung des zunächste geführten Amtstaktes um eine Zeitspanne verzögert vornimmt, die mindestens so groß ist wie ein für die Ausschaltung der Regelungseinrichtung des geführten Amtstakterzeugers bei Ausfall des führenden Amtstaktes erforderlicher Zeitraum.

Anhand der Zeichnungen wird ein Ausführungsbeispiel der Erfindung beschrieben. Zunächst wird das Ausführungsbeispiel im allgemeinen Sinn erläutert. Weiter unten geht di Erfindung genauer auf die erfindungsgemäßen Zusammenhänge des Ausführungsbeispiels ein. Es zeigt

Fig. 1 schematisch ein Ausführungsbeispiel eine Schaltungsanordnung zur Takterzeugung gemäß der Erfindung;

Fig. 2 zeigt ebenfalls in Form eines Ausführungsbeispiels schaltungstechnische Einzelheiten der Schaltungsanordnung nach Fig. 1;

Fig. 3 und Fig. 4 schließlich verdeutlichen durch entsprechende Schaltzustandsdiagramme allgemein die Wirkungsweise der Schaltungsanordnung nach Fig. 2.

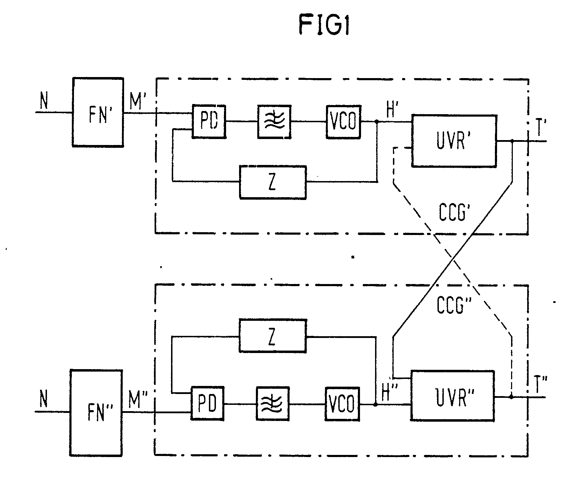

Die Zeichnung Fig. 1 zeigt schematisch ein Ausführungsbeispiel einer Schaltungsanordnung zur Takterzeugung mit einer doppelt vorgesehen Amtstakterzeugeranordnung CCG', CCG'' gemäß der Erfindung. Der eine der beiden Amtstakterzeuger, beispielsweise der Amtstakterzeuger CCG', möge an seinem Taktausgang T' einen von ihm unanhängig von dem anderen Amtstakterzeuger CCG'' erzeugten Amtstakt mit einer Taktfrequenz von beispielsweise 2,048 MHz liefern; der Amtstakterzeuger CCG'' möge einen mit dem von dem Amtstakterzeuger CCG' gelieferten Amtstakt zumindest angenähert phasengleich synchronisierten Amtstakt gleicher Frequenz liefern. Hierbei werden die beiden Amtstakterzeuger CCG' und CCG'' jeweils durch einen Mastertakt M' bzw. M'' mit einer Taktfrequenz von beispielsweise 2,048 MHz in der Taktfrequenz servosynchronisiert, der dem betreffenden Amtstakterzeuger CCG' bzw. CCG'' von einer von einem Normaltakt von beispielsweise ebenfalls 2,048 MHz beaufschlagten Frequenznachsteuereinrichtung FN' bzw. FN'' her zugeführt wird. Solche Frequenznachsteuereinrichtungen, die im wesentlichen einen PLL-Oszillator und einen Speicher für die jeweilige Regelgröße aufweisen, in welchem die jeweils gespeicherte Regelgröße bei einem Ausfall des Normaltakts erhalten bleibt, sind grundsätzlich (z.B. aus der DE—B—26 36 150) bekannt, weshalb sich hier weitere Erläuterungen dazu erübrigen; genügt hier zu erwähnen, daß solche Frequenznachsteuerungseinrichtungen eine geforderte Frequenztoleranz der Tastertakte M', M'' von $10^{-9}$/d zu gewährleisten vermögen.

Es sei hier bemerkt, daß der Normaltakt N seinerseits direkt von einem zentralen Normaltaktgenerator herrühren kann, an den eine Vielzahl gleicher oder ähnlicher Schaltungsanordnungen parallel angeschlossen sind; der Normaltakt N kann aber von einem zentralen Normaltaktgenerator her auch über eine Kettenschaltung von jeweils masterslave-betriebenen Taktgeneratoren bzw. Frequenznachsteuerschaltungen abgeleitet sein.

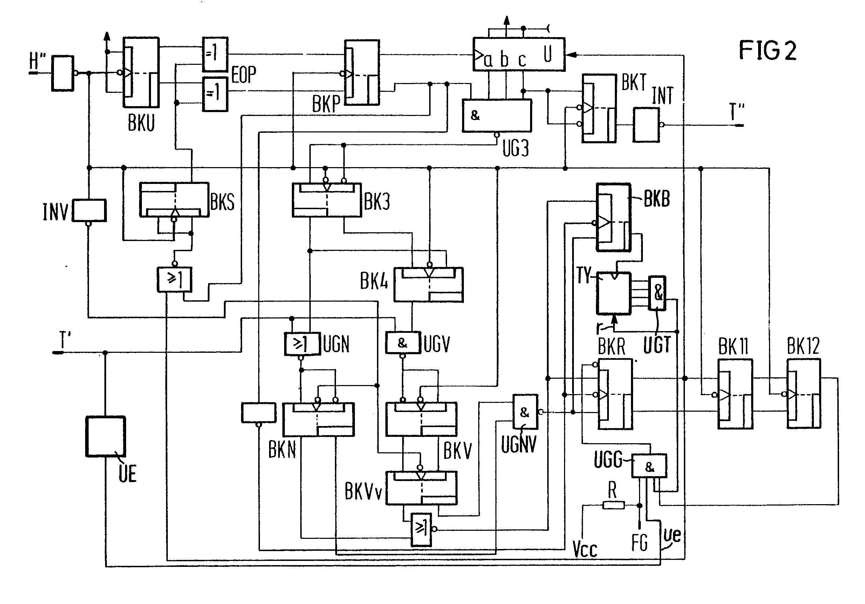

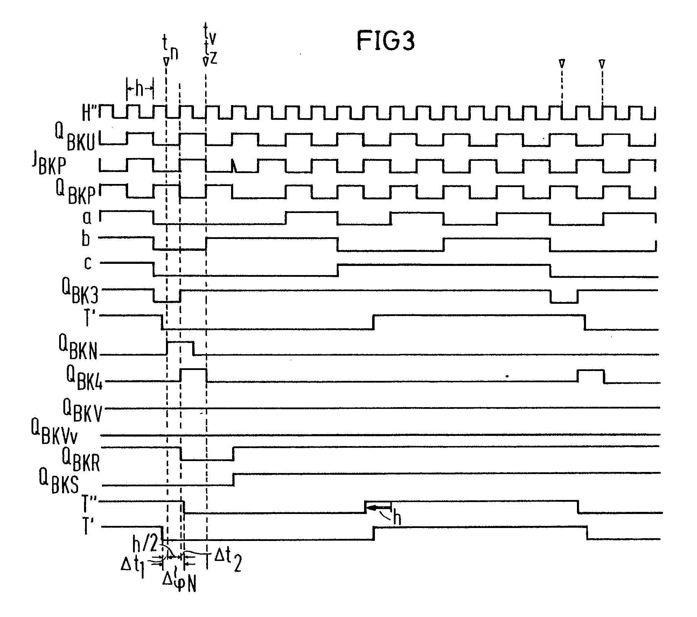

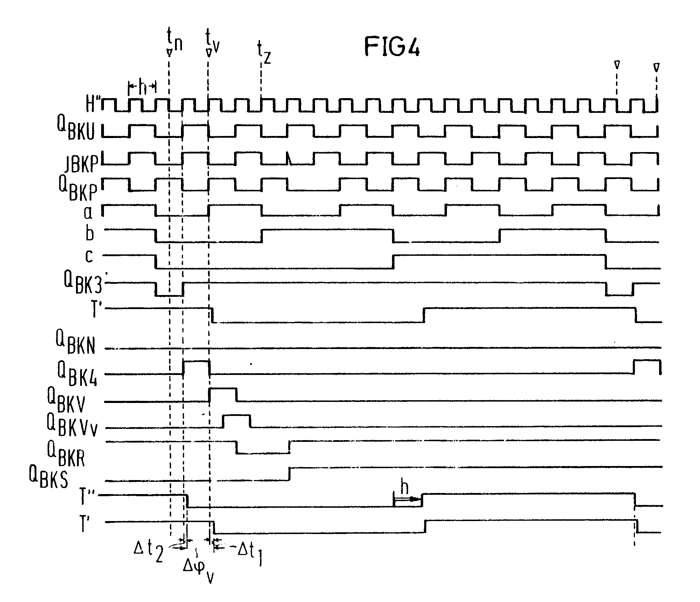

Die beiden Mastertakte M' und M'' können sich in ihrer Phasenlage um bis zu $2\pi$ (entsprechend 488 ns bei einer Masterkraftfrequenz von 2,048 MHz) unterscheiden. Damit sich dennoch eine Phasendifferenz zwischen den beiden Amtstakten T' und T'' in den gewünschten Grenzen von beispielsweise 35 ns hält, erzeugen nun sowohl der führende Amtstakterzeuger CCG' als auch der von ihm geführte Amtstakterzeuger CCG'', durch den jeweils zugeführten Mastertakt M' bzw. M'' servosynchronisiert, einen Zwischentakt H' bzw. H'' mit einer Taktperiode h (in Fig. 3 und Fig. 4) von beispielsweise 30,52 ns (bei einer Zwischentaktfrequenz von 32,768 MHz), die höchstens gleich der maximal zugelassenen Phasendifferenz (in Beispiel 35 ns) zwischen den von den beiden Amtstakterzeugern CCG' und CCG'' gelieferten Amtstakten T' und T'' ist. Dies geschieht in der Schaltungsanordnung nach Fig. 1 jeweils in einem einen Phasendiskriminator PD, einen Tiefpaß, einen in der Frequenz aufweisenden Zwischentakt, wie er in Fig. 3 und Fig. 4 in Zeile H'' dargestellt ist, beaufschlagte Zwischentakteingang H'' zunächst zu einer Zwischentakt-Frequenzhalbierungsstufe in Form eines bistabilen Kippgliedes BKU, dessen Schaltzustände in Fig. 3 und Fig. 4 jeweils in der Zeile $Q_{BKU}$ verdeutlicht sind. Über einen durch zwei EXCLUSIV-ODER-Glieder EOP, denen ein bistabiles Kippglied BKP nachgeschaltet ist, gebildeten Phasenumtaster ist der Zwischentakt-Frequenzhalbierungsstufe BKU ein weiterer Frequenzuntersetzer U nachgeschaltet, der durch einen Binärzähler gebildet sein kann und mit dessen der Amtstaktfrequenz von im Beispiel 2,048 MHz entsprechendem Ausgang c über ein bestabiles Kippglied BKT der Amtstaktausgang T'' des Amtstakterzeugers verbunden ist. Eingangssignale und Schaltzustände des bistabilen Schaltgliedes BKP sind in Fig. 3 und Fig. 4 jeweils in den Zeilen $J_{BKP}$ und $Q_{BKP}$ angedeutet, Schaltzustände des Frequenzuntersetzers U in den Zeilen a, b, c. Jeweils in Zeile T'' ist in Fig. 3 und Fig. 4 der an Amtstaktausgang T'' der Schaltungsanordnung nach Fig. 2 auftretende Amtstakt dargestellt.

An den Frequenzuntersetzer U ist eine Phasenvergleichsschaltung für den Phasenvergleich zwischen dem geführten Amtstakt T'' und dem über eine Leitung T' zugeführten führenden Amtstakt, wie er in Fig. 3 und Fig. 4 jeweils in Zeile T' dargestellt ist, angeschlossen. Diese Vergleichsschaltung weist zunächst zwei Zeitfensterschaltungen auf, die durch ein NAND-Glied UG3 und ein bistabiles Kippglied BK3 sowie ein bistabiles Kippglied BK4 gebildet werden; Schaltzustände der beiden bistabilen Kippglieder sind in Fig. 3 und Fig. 4 in den Zeilen $Q_{BK3}$ und $Q_{BK4}$ dargestellt. Die beiden bistabilen Kippglieder BK3 und BK4 führen zu den jeweils einen Eingängen zweier Verknüpfungsglieder, nämlich des NOR-Gliedes UGN und des UND-Gliedes UGV, die an ihrem jeweils zweiten Eingang mit dem Amtstakt T' steuerbaren Oszillator VC0 und einen Frequenzuntersetzer Z umfassenden PLL-Zwischentaktgenerator. Solche PLL-Taktgeneratoren sind grundsätzlich (z.B. aus "Principles of Colour Television", John Wiley & Sons Inc., New York 1956, S. 180; ELEKTRONIK (1973)8, 285—287) bekannt, weshalb sich hier weitere Erläuterungen dazu erübrigen.

Dem vom Mastertakt M'' servosynchronisierten Zwischentaktgenerator C-PD-VC0 des geführten Amtstakterzeugers CCG'' ist eine digitale Taktuntersetzungs- und Phasensynchronisierungsschaltung UVR'' nachgeschaltet, die mit einem Vergleichseingang an den Ausgang T' des führenden Amtstakterzeugers CCG' angeschlossen ist und an deren Ausgang T'' der Amtstakt des geführten Amtstakterzeugers CCG'' auftritt. In dieser digitalen Taktuntersetzungs- und Phasensynchronisierungsschaltung UVR'' wird der Amtstakt T'' des geführten Amtstakterzeugers CCG'' mit dem Amtstakt T' des führenden Amtstakterzeugers CCG' verglichen, wobei bei Feststellung einer einen Grenzwert in der Größenordnung einer Zwischentaktperiode überschreitenden Phasendifferenz zwischen den beiden Amtstakten eine Halbperiode des geführten Amtstaktes T'' um die Länge einer Zwischentaktperiode bei nacheilendem geführtem Amtstakt T'' verkürzt und bei voreilendem geführtem Amtstakt T'' verlängert wird, wie dies nachfolgend anhand des Ausführungsbeispiels noch näher erläutert wird.

Ein Beispiel dafür, wie die digitale Taktuntersetzungs- und Phasensynchronisierungsschaltung UVR zweckmäßig ausgebildet sein kann, ist in der Zeichnung Fig. 2 dargestellt; die Wirkungsweise der Schaltungsanordnung nach Fig. 2 wird durch die in den Zeichnungen Fig. 3 und Fig. 4 dargestellten Schaltzustandsdiagramme verdeutlicht. In der Schaltungsanordnung nach Fig. 2 führt der mit dem die Zwischentaktfrequenz von beispielsweise 32,768 MHz des jeweils führenden Amtstakterzeugers beaufschlagt sind. Den beiden Verknüpfungsgliedern UGN und UGV sind bistabile Kippglieder BKN bzw BKV, BKVv nachgeschaltet, deren Schaltzustände in Fig. 3 und Fig. 4 jeweils in den Zeilen $Q_{BKN}$, $Q_{BKV}$, $Q_{BKVv}$ dargestellt sind und die über eine ODER-Schaltung zusammengefaßt zu einem bistabilen Kippglied BKR führen. An dieses bistabile Kippglied BKR ist zum einen mit einem besonderen Schalteingang der Frequenzuntersetzer U angeschlossen und zum anderen ein durch ein bistabiles Kippglied BKS gegebenes Stellglied für den Phasenumtaster EOP. Die Schaltzustände der beiden zuletzt genannten bistabilen Kippglieder sind in Fig. 3 und Fig. 4 in den Zeilen $Q_{BKR}$ und $Q_{BKS}$ dargestellt.

Mit Hilfe der Verknüpfungsglieder UGN und UGV und der jeweils nachfolgenden binären Kippglieder BKN bzw. BKV und BKVv wird festgestellt, ob die Phasendifferenz zwischen führendem Amtstakt T' und geführtem Amtstakt T'' einen vorgegebenen Grenzwert überschreitet:

Eilt der geführte Amtstakt T'' gegenüber führenden Amtstakt T' soweit nach, daß im Zeitpunkt $t_n$ (in Fig. 3)—d.h. im Zeitpunkt der in dem vom bistabilen Kippglied BK3 bestimmten Zeitfenster (siehe Zeile $Q_{BK3}$ in Fig. 3) auftretenden, unmittelbar vor der negativen Taktflanke des geführten Amtstaktes T'' liegenden negativen Taktflanke des Zwischentaktes H''—auf der den Amtstakt T' führenden Leitung bereits ein "O"-Signal auftritt, so wird über das NOR-Glied IGN das bistabile Kippglied BKN aktiviert. Unter Berücksichtigung der Arbeitszeiten von Verknüpfungsgliedern, Invertern und bistabilen Kippgliedern ist dies der Fall bei einer Phasendifferenz zwischen führendem Amtstakt T' und geführtem Amtstakt T'', die größer als

$$\Delta\varphi_{Nmax}=\Delta t_{1max}+\Delta t_{2max}+h/2$$

ist, wobei sich die Bedeutung der einzelnen Summanden un mittelbar aus Fig. 3 ergibt. In der Schaltungsanordnung nach Fig. 2 ist

$$\Delta\varphi_{Nmax}=(t_{UGNmax}+t_{BKNmax}-t_{INVmin})$$
$$+(t_{BKTmax}+t_{INTmax})+h/2,$$

worin die bei den einzelnen Arbeitszeiten angegebenen Indizes jeweils auf den entsprechenden Schaltungs baustein hinweisen; in der Praxis kann etwa

$$\Delta\varphi_{Nmax}=(5,5+3-1,2)+(7+1,3)+15,26$$
$$=30,8 \text{ ns sein.}$$

Eilt umgekehrt der geführte Amtstakt T'' gegenüber dem führenden Amtstakt T' soweit vor, daß im Zeitpunkt $t_v$ (in Fig. 4)—d.h. im Zeitpunkt der am Ende des vom bistabilen Kippglied BK4 bestimmten Zeitfensters (siehe Zeile $Q_{BK4}$ in Fig. 4) auftretenden, unmittelbar hinter der negativen Taktflanke des geführten Amtstaktes T'' liegenden positiven Taktflanke des Zwischentaktes H''—auf der den Amtstakt T' führenden Leitung noch ein "1"-Signal auftritt, so wird über das UND-Glied UGV das bistabile Kippglied BKV und eine halbe Zwischentaktperiode später das bistabile Kippglied BKVv aktiviert. Unter Berücksichtigung der Arbeitszeiten von Verknüpfungsgliedern, Invertern und bistabilen Kippgliedern ist dies der Fall bei einer Phasendifferenz zwischen geführtem Amtstakt T'' und führendem Amtstakt T', die größer als

$$\Delta\varphi_{Vmax}=h-\Delta t_{2min}-\Delta t_{1min}$$

ist, wobei sich die Bedeutung der einzelnen Glieder unmittelbar aus Fig. 4 ergibt. In der Schaltungsanordnung nach Fig. 2 ist

$$\Delta\varphi_{Vmax}=h-(t_{BKTmin}+t_{INTmin})-t_{UGVmin,}$$

worin wiederum die Indizes auf die entsprechenden Schaltungsbausteine hinweisen; in der Praxis kann etwa

$$\Delta\varphi_{Vmax}=30,52-(1,6+1,2)-1,8$$
$$=25,9 \text{ ns sein.}$$

Die Grenzwerte $\Delta\varphi_{Nmax}$ und $\Delta\varphi V_{max}$ liegen somit beide in der Größenordnung einer Zwischentaktperiode h von im Beispiel 30,52 ns und jedenfalls unterhalb der zwischen führendem Amtstakt T' und geführtem Amtstakt T' maximal zugelassenen Phasendifferenz von im Beispiel 35 ns.

Nachdem die Beschreibung bis hierher das erfindungsgemäße Aus führungsbeispiel in allgemeinem Sinne erläutert hat, wendet sie sich nun auch den erfindungsgemäßen Zusammenhängen zu. Hierzu wird weiterhin auf die Anordnung nach Fig. 2 bezuggenommen. Diese enthält entsprechende Ergänzungen gegenüber der Fig. 2 der DE—A—2907608.

Sowohl die Aktivierung des bistabilen Kippgliedes BKN als auch die Aktivierung des bistabilen Kippgliedes BKV bzw. BKVv hat zunächst eine Aktivierung des nachfolgenden bistabilen Kippgliedes BKB zur Folge. Letzteres bewirkt, daß einem Schieberegister TY jeweils Signal zugeführt wird, welches anzeigt, daß der geführte Amtstakt T'' gegenüber dem führenden Amtstakt T' voreilt oder nacheilt. Folgt im Rhythmus des Amtstaktes viermal unmittelbar nacheinander dieses Signal und wird es so dem Schieberegister TY zugeführt, so gibt das Verknüpfungsglied UGT ein Ausgangssignal ab, welches zu dem weiteren Verknüpfungsglied UGG gelangt, wodurch dieses ein Freigabesignal zu einem Sperreingang des bistabilen Kippgliedes BKR abgibt. Ist also über das bistabile Kippglied BKB viermal nacheinander dem Schieberegister TY das besagte Signal zugeführt worden, so wird dadurch das bistabile Kippglied BKR entsperrt. Erfolgt nun ein fünftes Mal eine Aktivierung des bistabilen Kippgliedes BKN oder des bistabilen Kippgliedes BKV bzw. BKVv, so hat dieses eine Aktivierung des nachfolgenden und nun entsperrtan bistabilen Kippgliedes zur Folge. Gleichzeitig führt das Ausgangssignal des Verknüpfungsgliedes UGT zum Rücksetzen aller Schieberegisterglieder des Schieberegisters TY über den Rücksetzeingang r. Über die bistabilen Kippglieder BK11 und BK12 wird nach zwei Zwischentaktperioden das Kippglied BKR wieder zurückgesetzt; überdies wird auch vom bistabilen Kippglied BKR aus ein Umschalten des bistabilen Kippgliedes BKS bewirkt. Letzteres hat zur Folge, daß dem Frequenzuntersetzer U über den Phasenumtaster EOP nunmehr ein zum bisherigen Takt inverser Takt zugeführt wird, was sich unmittelbar in einer Verlängerung der gerade auftretenden Halbperiode des geführten Amtstaktes T'' um die Dauer h einer Periode des Zwischentaktes H'' auswirkt, wie. dies bei voreilendem geführtem Amtstakt T'' vorgesehen und hierfür in Fig. 4 in Zeile T'' angedeutet ist.

Die Aktivierung des bistabilen Kippgliedes BKR hat in der Schaltungsanordnung nach Fig. 2 außerdem zur Folge, daß der durch einen Binärzähler realisierbare Frequenzuntersetzer U im Zeitpunkt $t_z$, d.h. zu der während der Aktivierung des bistabilen Kippgliedes BKR auftretenden positiven Taktflanke des Zwischentaktes H'', in den dem Zählzustand 2 entsprechenden Untersetzungszustand gesetzt wird. In diesen Untersetzungszustand gelangt der Frequenzuntersetzer U in diesem Augenblick bei voreilendem geführten Amtstakt T'' (Fig. 4) ohnehin, so daß der Setzvorgang keine weiteren Auswirkungen hat. Bei nacheilendem geführtem Amtstakt T'' (Fig. 3) würde der Frequenzuntersetzer im Zeitpunkt $t_z$ (in Fig. 3) an sich in einen dem Zählzustand entsprechenden Untersetzungszustand gelangen; tatsächlich wird der Frequenzuntersetzer U jetzt aber in den dem Zählzustand 2 entsprechenden Untersetzungszustand gesetzt. Damit wird der Untersetzer U im Ergebnis um einen zusätzlichen Untersetzungsschritt weitergeschaltet, was sich in Verbindung mit der bereits erwähnten Auswirkung der Phasenumtastung in einer Verkürzung der gerade auftretenden Halbperiode des geführten Amtstaktes T'' um die Dauer h einer Periode des Zwischentakts H'' auswirkt, wie sie bei nacheilendem geführten Amtstakt T'' vorgesehen und hierfür in Fig. 3 in Zeile T'' angedeutet ist.

Es folgt somit der geführte Amtstakt T'' dem führenden Amtstakt T' in der Phasenlage. Dabei ist die Phasensynchronisierung aber mit einer gewissen Hysterese behaftet, so daß Jittererscheinungen des führenden Amtstaktes T', wie sie in der Praxis mit Zeitamplituden etwa in der Größenordnung von 5 ns auftreten können, unbeachtlich bleiben. Der Hysteresebereich ergibt sich aus Fig. 3 un Fig. 4 mit

$$\delta = \Delta\varphi_{Nmin} + \Delta\varphi_{Vmin} - h$$
$$= t_{UGNmin} + t_{BKNmin} - t_{INVmax} - t_{UGVmax} + h/2$$

in der Praxis kann etwa

$$\delta = 1{,}6 + 3 - 1{,}2 - 7{,}5 + 15{,}26 = 11{,}2 \text{ ns}$$

sein. Diese Hysterese betrifft also die Tatsache, daß in jeweils einer Voreilung oder einer Nacheilung des geführten Amtstaktes gegenüber dem führendem Amtstakt bestehende Phasenlage-Abweichungen von der Phasensynchronisierung nur erfaßt werden, wenn jene in der oben angegebenen Weise ein bestimmtes Maß in der Größenordnung einer Zwischentaktperiode erreichen. Darüberhinaus aber ist durch die der Phasensynchronisierung dienende Regelungseinrichtung gemäß Fig. 2 und deren Beschreibung gewährleistet, daß die Phasensynchronisierung erst um eine Zeitspanne verzögert nach der mit obiger Hysterese festgestellten Voreilung oder Nacheilung von der Regelungseinrichtung vorgenommen wird. Diese Zeitspanne, die—wie erläutert—vier Zwischentaktperioden entspricht, (ebensogut kann je nach Zweckmäßigkeit diese Zahl auch kleiner oder größer gewählt werden, indem hierzu die Anzahl der Schieberegisterglieder des Schieberegisters BKB und die Anzahl der Eingänge des Verknüpfungsgliedes UGT demgemäß kleiner oder größer festgelegt wird), ist so bemessen, daß sie mindestens so groß ist wie ein für eine Ausschaltung der Regelungseinrichtung des jeweils geführten Amtstakterzeugers CCG'' bei Ausfall des führenden Amtstaktes erforderlicher Zeitraum.

Die letzten Ausführungen nehmen auf einen noch nicht im einzelnen beschriebenen Sachverhalt Bezug, worauf anschließend eingegangen sei. Die Schaltungsanordnung nach Fig. 2 weist noch einen Umschaltsignaleingang FG auf, der zu dem Sperreingang des bistabilen Kippgliedes BKR führt. Über diesen Umschaltsignaleingang kann durch ein synchron zum Amtstakt auftretender Umschaltungsignal "0" der bisher geführte Amtstakterzeuger umgeschaltet werden, so daß er nicht mehr nach Maßgabe des auf der Leitung T' auftretenden Amtstakts geführt wird; bezogen auf die Schaltungsanordnung nach Fig. 1 vermag der bisher geführte Amtstakterzeuger (CCG″ in Fig. 1) ggf. nunmehr seinerseits den in umgekehrten Sinne umgeschalteten, bisher führenden Amtstakterzeuger (CCG′ in Fig. 1) zu führen, wie dies in Fig. 1 durch eine gestrichelt gezeichnete Verbindung angedeutet ist. Ebenso, wie dieser Umschaltvorgang durch das obige Umschaltsignal von außen her bewirkt werden kann, ist er auch mittels einer Amtstaktüberwachungseinrichtung UE durchführbar. Diese dient dazu, bei einem geführten Amtstakterzeuger den über den Eingang T′ eintreffenden führenden Amtstakt zu überwachen.

Bei dessen Ausfall ist nach einer Amtstaktperiode nach der letzten richtig eingetroffenen Amtstaktimpulsflanke dieser Ausfall erkennbar. Stellt nun die Amtstaktüberwachungseinrichtung UE einen solchen Ausfall mittels einer entsprechenden, nach Maßgabe der Amtstakt-Zeitwerte eingestellten Zeitüberwachung fest, so führt sie über den Weg ue dem Verknüpfungsglied UGG das Umschaltesignal "0" zu. An dieser Stelle sie zum besseren Verständnis eingefügt, daß das Verknüpfungsglied UGG auch so aufgefaßt werden kann, daß es eine Oder-Bedingung erfüllt: Erhält es über alle seine Eingänge das Signal "1", so gibt es das entsperrende Signal "1" auf den Sperreingang des bistabilen Kippgliedes BKR ab. Wenn es über wenigstens einen Eingang das Signal "0" erhält, so gibt es das Sperrsignal zum Sperreingang des bistabilen Kippgliedes BKR hin ab. Durch die oben beschriebene verzögernde Wirkung des bistabilen Kippgliedes BKS wird bei einem geführten Amtstakterzeuger erreicht, daß ein Ausfall des führenden Amtstaktes nicht zu einer Fehlinterpretation führen kann, nämlich zu einer die jeweilige Amtstaktperiod verkürzenden oder verlängernden Phasensynchronisation. Vielmehr wird ein Umschaltevorgang durchgeführt, bevor eine in einem solchen Falle nicht erforderliche, vielmehr aber sich störend auswirkende Phasensynchronisation stattfinden kann.

**Patentansprüche**

1. Schaltungsanordnung für Fernmeldeanlagen, insbesondere PCM-Fernsprechvermittlungsanlagen, mit einer doppelt vorgesehenen Amtstaktversorgungsanordnung (CCG′, CCG″), von welcher die jeweils eine der beiden Amtstakterzeuger einen unabhängig von dem jeweils anderen Amtstakterzeuger erzeugten Amtstakt (T′, T″) liefert und der jeweils andere (geführte) Amtstakterzeuger einen mit dem von dem jeweils einen (führenden) Amtstakterzeuger gelieferten Amtstakt zumindest angenähert phasengleich synchronisierten Amtstakt liefert und von welcher jeder der beiden Amtstakterzeuger durch einen ihm zugeführten Mastertakt (M′, M″) servosynchronisiert einen Zwischentakt (H′, H″) mit einer gegenüber der maximal zugelassenen Phasendifferenz zwischen den von den beiden Amtstakterzeugern gelieferten Amtstakt höchstens gleich großen Taktperiode erzeugt, und in welcher in jedem der beiden Amtstakterzeuger der Zwischentakt je einem Frequenzuntersetzer (BKU, U) zur Gewinnung des Amtstaktes zugeführt wird, und in welcher der jeweils geführte Amtstakterzeuger seinen Amtstakt mit dem Amtstakt des jeweils führenden Amtstakterzeugers vergleicht (PD) und bei Feststellung einer einen Grenzwert in der Größenordnung einer Zwischentaktperiode (h) überschreitenden Phasendifferenz eine Halbperiode des geführten Amtstaktes mit Hilfe einer Regelungseinrichtung (UVR) um die Länge einer Zwischentaktperiode bei nacheilendem geführtem Amtstakt verkürzt und bei voreilendem Amtstakt verlängert, und in welcher der vom jeweils führenden Amtstakterzeuger gelieferte Amtstakt überwacht und bei dessen Ausfall die Regelungseinrichtung des bis dahin geführten Amtstakterzeugers ausgeschaltet wird, wodurch dieser zum führenden Amtstakterzeuger wird, dessen Amtstakt nun dem bisher führenden und zum geführten gewordenen Amtstakterzeuger zugeleitet wird, dadurch gekennzeichnet, daß die Regelungseinrichtung (UVR) des zunächst geführten Amtstakterzeugers die Verlängerung bzw. die Verkürzung der Halbperiode des von ihm gelieferten Amtstaktes bei Feststellung einer Voreilung oder Nacheilung des zunächst geführten Amtstaktes um eine Zeitspanne verzögert vornimmt, die mindestens so groß ist wie ein für die Ausschaltung der Regelungseinrichtung des geführten Amtstakterzeugers bei Ausfall des führenden Amtstaktes erforderlicher Zeitraum.

2. Schaltungsanordnung nach Anspruch 1, dadurch gekennzeichnet, daß zur Abmessung der Zeitspanne eine Impulse des führenden Amtstaktes abzählende Zähleinrichtung, insbesondere ein Schieberegister (TY) mit einem UND-Verknüpfungsglied (UGT), vorgesehen ist.

**Revendications**

1. Montage pour des installations de télécommunications, notamment des installations de commutation téléphoniques MIC, comportant un dispositif (CCG′, CCG″) délivrant la cadence réseau, prévu en double, et dont l'un des deux générateurs délivrant des cadences réseau délivre une cadence réseau (T′, T″) produite indépendamment de l'autre générateur respectif délivrant une cadence réseau, et dont l'autre générateur (asservi) délivrant une cadence réseau délivre une cadence réseau synchronisée de manière à être au moins approximativement en phase avec la cadence réseau délivrée par le premier générateur (pilote) délivrant une cadence réseau, et dans lequel chacun des deux générateurs délivrant des cadences réseau produit, d'une manière synchronisée de façon asservie par une cadence pilote (M′, M″), qui lui est envoyée, une cadence intermédiaire (H′, H″) présentant une période égale au maximum à la différence de phase maximale autorisée entre les cadences réseau délivrées par les deux générateurs délivrant les cadences réseau, et dans lequel, dans chacun des deux générateurs délivrant les cadences réseau, la cadence intermédiaire est envoyée respectivement à un diviseur de fréquence (BKU, U), pour l'obtention de la cadence réseau, et dans lequel le générateur délivrant une cadence réseau, qui est respectivement asservi, compare (PD) sa cadence réseau à la cadence réseau du générateur délivrant une cadence réseau, qui est respectivement pilote, et, dans le case de la détermination d'une différence de phase dépassant une valeur limite de l'ordre d'une période (h) de la cadence intermédiaire, raccourcit une demi-période de la cadence réseau asservie, à l'aide d'un dispositif de régulation (UV), de la longueur d'une période de la cadence intermédiaire, lorsque le cadence réseau asservie est en avance, et dans lequel la cadence réseau délivrée par le générateur d'une cadence réseau, qui est respectivement pilote, est contrôlée et, dans le cas de la défaillance de cette cadence, le dispositif de régulation du générateur délivrant une cadence réseau, qui était jusqu'alors asservi, est débranché, ce qui a pour effet que ce générateur devient le générateur délivrant une cadence réseau, pilote, dont la cadence réseau est envoyée au générateur délivrant une cadence réseau, qui était jusqu'alors pilote et est devenu asservi, caractérisé par le fait que, lors de la détermination d'une avance ou d'un retard de la cadence réseau tout d'abord asservie, le dispositif de régulation (UV) du générateur délivrant une cadence réseau, qui tout d'abord était asservi, exécute l'allongement ou le raccourcissement de la demi-période de la cadence réseau qu'il délivre, avec un retard correspondant à un intervalle de temps qui est au moins égal à un intervalle de temps nécessaire pour le débranchement du dispositif de régulation du générateur délivrant une cadence réseau, qui est asservi, lors de la défaillance de la cadence réseau pilote.

2. Montage suivant la revendication 1, caractérisé par le fait que pour mesurer l'intervalle de temps, il est prévu un dispositif de comptage, qui décompte des impulsions de la cadence réseau pilote, notamment un registre à décalage (TY) comportant un circuit logique ET (UGT).

### Claims

1. A circuit arrangement for telecommunications systems, in particular PCM telephone exchange systems, with a duplicated exchange clock supply arrangement (CCG', CCG'') in which the respective first of the two exchange clock generators supplies an exchange clock signal (T', T'') which is generated independently of the respective other exchange clock generator, and the respective other (slave) exchange clock generator supplies an exchange clock signal which is synchronised so as to be at least approximately in phase with the exchange clock signal supplied by the respective first (master) exchange clock generator, and in which each of the two exchange clock generators, servo-synchronised by a supplied master clock signal (M', M''), generates an intermediate clock signal (H', H'') with a clock period which at the maximum is equal to the maximum permissible phase difference between the exchange clock signals supplied by the two exchange clock generators, and in which, in each of the two exchange clock generators, the intermediate clock signal is supplied to a respective frequency divider (BKU, U) for the acquisition of the exchange clock signal, and in which the respective slave exchange clock generator compares its exchange clock signal with the exchange clock signal of the respective master exchange clock generator (PD) and when a phase difference is established which exceeds a limit value in the order of one intermediate clock period (h) by means of a regulating device in the case of a lagging slave exchange clock signal shortens—and in the case of a leading exchange clock signal lengthens—one half period of the slave exchange clock signal by the length of one intermediate clock period, and in which the exchange clock signal supplied by the respective master exchange clock generator is monitored and in the event of the failure thereof the regulating device of the hitherto slave exchange clock generator is disconnected, whereby the hitherto slave exchange clock generator now becomes the master exchange clock generator whose exchange clock signal is now supplied to the hitherto master exchange clock generator which has now become the slave exchange clock generator, characterised in that when it establishes a leading or lagging of the initially slave exchange clock signal the regulating device (UVR) of the initially slave exchange clock generator lengthens or shortens respectively the half period of the exchange clock signal supplied by itself with a time delay which is at least equal to the time interval required to disconnect the regulating device of the slave exchange clock generator in the event of the failure of the master exchange clock signal.

2. A circuit arrangement as claimed in claim 1, characterised in that the time interval is apportioned by a counting device which counts pulses of the master exchange clock signal, in particular a shift register (TY) with an AND-logic-linking element (UGT).

# FIG1

FIG 2

FIG3

0 100 076

FIG4

0 100 076